# EUROPEAN PATENT APPLICATION

(11) **EP 4 844 370 A1**
(43) Date of publication of application: **25.11.2026**
(21) Application number: 25177947.6
(22) Date of filing: 21.05.2025
(51) Int. Cl.: G01N 17/00

(54) **ELECTRIC SYSTEM AND METHOD OF OPERATING AN ELECTRIC SYSTEM**

(71) Applicant: Hitachi Energy Ltd, 8050 Zürich (CH)
(72) Inventor: MENG, DeLun, Beijing, 100018 (CN); ZHANG, Hui, Beijing, 100101 (CN); WANG, Yang, Beijing, 100077 (CN); Sbravati, Alan, Raleigh, 27610 (US); Buijs, Thomas, Saint Augustin de Desmaures, G3A 2N8 (CA)
(74) Representative: Epping - Hermann - Fischer

(57) **Abstract**

An electric system (1) comprising an electrical transformer (2) is specified, wherein a component of the electrical transformer comprises a corrosion-prone surface (3) in contact with a fluid (4);
- the electric system (1) comprises an electrical resistance sensor (5) with an electrical resistance probe (51), wherein a working electrode (510) of the electric resistance probe (51) is in contact with the fluid (4), and
- the electrical resistance sensor (5) is configured to provide information on a corrosion state of the corrosion-prone surface (3) of the component.

Further, a method of operating an electric system (1) with an electrical transformer (2) is specified.

## Description

The present disclosure relates to an electric system and to a method of operating an electric system.

Corrosive sulfur in electrical transformer fluids may cause problems such as the corrosion of silverplated contacts and the deposition of conductive or semi-conductive contaminants possibly formed by the reaction of the fluid and the metallic surfaces, such as in the case of copper sulfide being formed over the surface of bare copper. This may result in failure of the electrical transformer induced by the presence of corrosive sulfur if a flashover occurs due to flaking of deposited silver sulfide and/or the silver-plated layer from sliding contacts, for example.

In order to determine the corrosion state of such coatings inside the electrical transformer, an internal in-situ inspection may be performed. However, this inspection is challenging as the spaces are tight and the environment is not human-friendly. Alternatively, the inspection may be performed by a submarine robot. However, this requires expensive equipment. In addition, it is difficult for the robot to inspect all critical points within the transformer and it will not be able to evaluate the potential deposition of contaminants inside paper insulated conductors.

Embodiments of the disclosure relate to reducing the inspection effort.

According to an embodiment of an electric system, the electric system comprises an electrical transformer wherein a component of the electrical transformer comprises a corrosion-prone surface in contact with the fluid. The electric system comprises an electrical resistance sensor with an electrical resistance probe wherein a working electrode of the electrical resistance probe is in contact with the fluid. The electrical resistance sensor is configured to provide information on a corrosion state of the corrosion-prone surface of the component.

The electrical transformer may be any type of transformers using active components immersed in a fluid. For example, the electrical transformer is a power transformer.

Due to the corrosiveness of the fluid inside the electrical transformer, a cross-sectional area or a thickness of the working electrode decreases over time. This leads to an increasing electrical resistance of the working electrode. The signal of the electrical resistance sensor can be used to obtain information on the corrosion state of the corrosion-prone surface of the component. Thus, the corrosion state of the corrosion-prone surface of the component can be estimated without having to perform an in-situ inspection of the component itself.

The working electrode or probe may also be covered with insulating paper, representing more closely the behaviour of insulated conductors of windings. The electrical resistance will be affected both by the direct corrosion effect or by the formation or deposition of corrosion byproducts or other contaminants in the probe.

Compared to an inspection by a human, the cost and effort may be significantly reduced. Further, it is not necessary to expose a human to the safety risks within an electrical transformer. In addition, the reliability of the electrical transformer can be increased as a predictive or preventive maintenance can be performed before the electrical transformer fails. Thus, further damages caused by the failure of the electrical transformer can be avoided.

The electrical resistance probe can be located inside a pipe or a valve or any other specific location within the transformer where the electrical resistance probe is in contact with the fluid. For example, the working electrode of the electrical resistance probe may be located in an isolated or depressurized valve or pipe or at the most aggressive location within the electrical transformer.

The pipe or valve used for the electrical resistance probe may be a pipe or valve already present in the electrical transformer for other reasons. Alternatively, the pipe or valve used for the electrical resistance probe may be specifically provided for a proper placement of the electrical resistance probe.

For example, the electrical resistance probe may be installed in a side stream which is isolated and/or depressurized if the flow velocity and/or pressure of the fluid within the electrical transformer is high.

For example, the fluid comprises a mineral oil, an ester, or a silicone liquid. During operation of the electric system there may be a circular flow of the fluid inside the electrical transformer.

According to a further embodiment of the electric system, a surface of the working electrode is made from the same material as the corrosion-prone surface of the component.

For example, the surface of the working electrode may comprise silver or consist of silver. For example, the working electrode may be formed from pure silver or from a silverplated metal such as copper. Alternatively, the working electrode may comprise or consist of copper or may comprise copper with paper. Alternatively, the working electrode may comprise or consist of silicon steel or may comprise silicon steel with anticorrosion coating. In principle, any material that is used as a coating material and conductive material within the electrical transformer may be suitable for the surface of the working electrode.

The electrical resistance probe may also comprise two or more than two working electrodes comprising different coatings and/or consisting of different materials. Different working electrodes may be used to represent different elements or coatings and/or different degradation processes within the electrical transformer. Alternatively or in addition, two working electrodes may differ from one another with respect to a covering material such as an insulating paper that covers only one of the two working electrodes.

According to a further embodiment of the electric system, the electrical resistance probe is located inside a chamber with a circulation of the fluid, wherein the fluid is heatable to a temperature representative of the actual temperature at the corrosion-prone surface of the component. Thus, the electrical resistance probe may be subjected to an environment that substantially corresponds to the environment of the corrosion-prone surface of the component to be monitored.

The electric system may also comprise several chambers representing different temperatures occurring within the electrical transformer. For example, the temperature may correspond to a temperature at the bottom or at the top of the tank or at a specific location such as the position of the on-load tap changer.

According to a further embodiment of the electric system, the electrical resistance probe further comprises an encapsulated reference electrode which is made from the same material as the working electrode. The reference electrode is permanently shielded from the fluid in transformer. Thus, the reference electrode is not in contact with the fluid. The reference electrode may be used to compensate for effects having an impact on the electrical resistance.

According to a further embodiment of the electric system, the electric system further comprises an optical detection device configured to monitor an optical parameter of the working electrode of the electrical resistance probe. For example, the optical detection device may comprise an imaging device that may capture pictures of the working electrode.

For example, the optical parameter is a color of the working electrode. A color change of the working electrode may be used as an indicator for corrosion due to corrosive matter, such as sulphur and sulphide in the fluid.

Alternatively, the optical parameter may be a reflectivity of the working electrode. The reflectivity may be used as an indicator for corrosion as well. In other words, an analysis of the corrosion status may be based on a difference between an emitted and a received light signal. In this case, an optical detector that does not provide any spatial resolution may be sufficient. For example, the electric system comprises an optical fiber configured to guide the light between the working electrode and the detector.

The detected optical signal such as pictures or information on the reflected light may be recorded locally or remotely.

According to a further embodiment of the electric system, the electric system comprises an inspection window wherein the working electrode of the electrical resistance probe is visible through the inspection window. For example, the imaging device may be located outside the tank of the electrical transformer.

According to a further embodiment of the electric system, the electrical resistance sensor further comprises a measurement module located outside a tank of the electrical transformer. The measurement module may be connected to the electrical resistance probe by a wire connection or by a wireless connection. The measurement module may be spaced apart from the electrical resistance probe or directly adjoin the electrical resistance probe.

According to a further embodiment of the electric system, the corrosion-prone surface is an electric contact surface of the component of the electrical transformer. For example, the component is an on-load tap changer. For example, the electric contact surface is a portion of a selector contact or a collector ring.

According to a further embodiment of the electric system, the electric system comprises a remote communication unit to transmit a signal of the electrical resistance sensor. For example, the measurement module is connected to a remote communication unit of the electrical transformer. The connection to the remote communication unit may be made by a wire or by a wireless communication. Alternatively, the measurement module may comprise an individual remote communication unit.

Further, a method of operating an electric system is specified.

According to an embodiment of the method, the electric system comprises a component with a corrosion-prone surface wherein a corrosion state of the corrosion-prone surface is assessed during operation of the electric system by means of an electrical resistance sensor with a working electrode that is in contact with the fluid.

The electric system described above is particularly suited to be operated using the method. Thus, features described in connection with the electric system may also be used for the method and vice versa.

By means of the method, an electrical resistance sensor immersed in an electrical transformer fluid may be used to assess the fluid corrosivity and the impact on one or more different materials used inside the electrical transformer.

Consequently, a direct access to the critical components comprising a corrosion-prone surface is not required.

According to a further embodiment of the method, the method further includes monitoring the working electrode by means of an imaging device. Thus, an optical monitoring of the working electrode may be performed during operation of the electric system.

According to an embodiment of the method, the corrosion state is assessed based on a correlation between an electrical resistance or conductivity variation and a change in color of the electrical resistance probe obtained from an accelerated aging test. The correlation can be used as an indicator or as criterion as to when preventive maintenance of the electrical transformer has to be performed based on the data obtained from the electrical resistance sensor.

According to a further embodiment of the method, a calibration of a signal of the electrical resistance sensor is performed based on a standard test method for corrosive sulfur in electrical insulating fluids according to ASTM D1275 and/or a silver strip test according to DIN 51353 and/or a test according to IEC 62535.

Features described above in connection with an embodiment of the electric system or the method may be combined with features described in connection with other embodiments of the electric system or the method unless the features are contradictory.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

In the Figures:
Figure 1 shows an electric system according to an exemplary embodiment in a schematic representation;
Figure 2 shows an electrical resistance sensor according to an exemplary embodiment in schematic representation;
Figures 3A and 3B show two examples of positions of an electrical resistance probe in a pipe illustrated in a cross-sectional view;
Figure 4A shows a detail of the electric system according to an exemplary embodiment in a schematic cross-sectional view;
Figure 4B shows a detail of the electric system according to an exemplary embodiment in a schematic cross-sectional view;
Figure 5 shows a detail of an electric system according to an exemplary embodiment in a schematic representation;
Figure 6 shows a detail of an electric system according to an exemplary embodiment in a schematic representation;
Figure 7 shows an exemplary embodiment of a method of operating an electric system; and
Figure 8 shows an example of a calibration setup.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

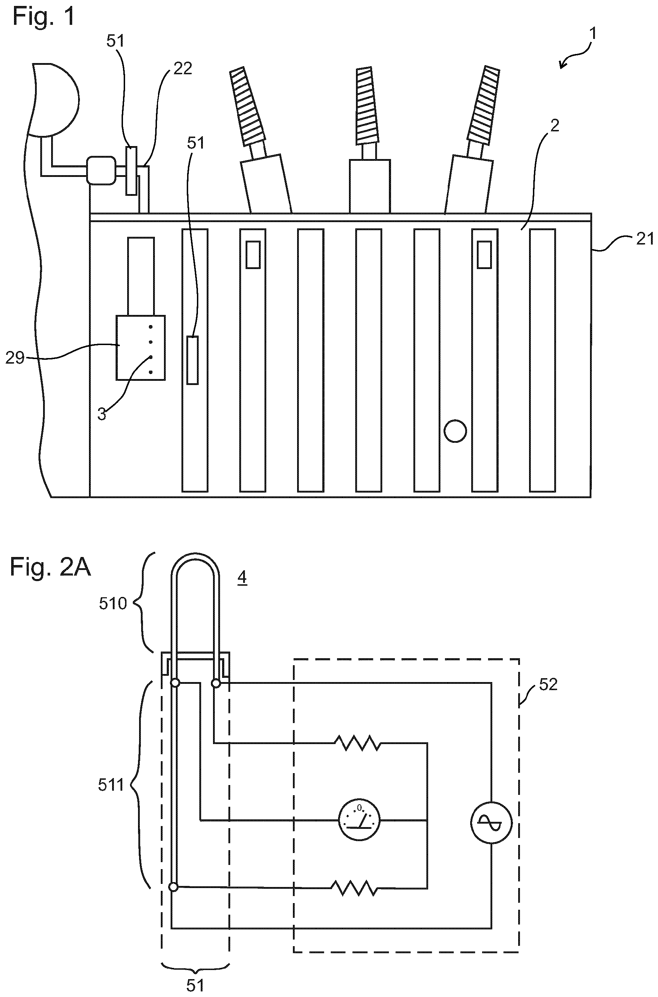

The electric system 1 illustrated in Figure 1 comprises an electrical transformer 2 wherein a component of the electrical transformer 2 comprises a corrosion-prone surface 3 in contact with a fluid 4. For example, the fluid 4 is an electrically insulating fluid such as a mineral oil, a silicone oil, or an ester fluid.

The electric system 1 further comprises an electrical resistance sensor 5 with an electrical resistance probe 51 wherein a working electrode 510 of the electrical resistance probe 51 is in contact with the fluid 4. The electrical resistance sensor 5 is configured to provide information on a corrosion state of the corrosion-prone surface 3 of the component.

In the exemplary embodiment of Figure 1, the component with the corrosion-prone surface is an on-load tap changer 29. The switching contacts, the selector contacts or the collector rings of the on-load tap changer 29 represent corrosion-prone surfaces 3.

By means of a signal obtained from the electrical resistance sensor 5, the corrosion state of the corrosion-prone surface 3 can be monitored. Consequently, a direct in-situ inspection of the corrosion-prone surface 3 itself is not required.

If the switching contacts, the selector contacts, and the collector rings of the on-load tap changer are plated with silver, a surface of the working electrode 510 may be made from silver as well. For example, the working electrode 510 may be made from pure silver or may comprise a metal such as copper coated with silver. In particular, the working electrode 510 may be coated with the same plating process as the electrical contacts representing the corrosion-prone surface 3 to be monitored.

In principle, the corrosion-prone surface 3 may be any surface within the electrical transformer that is negatively affected by the fluid 4 during operation of the electric system. Thus, different materials may be used for one or more working electrodes 510 of the electrical resistance sensor such as bare copper, copper plated with a metal such a silver, copper with paper or any other material used in the electrical transformer 2, in particular in contact with the fluid 4.

For example, the surface of the working electrode 510 may be made from the same material as a coating of a core of the electrical transformer 2.

Figure 1 exemplarily shows two possible locations of the electrical resistance probe 51. For example, the electrical resistance probe may be installed in an already existing or newly added pipe 22 or side stream of the electrical transformer 2. Alternatively, the electrical resistance probe 51 may be mounted to a wall of a tank 21 of the electrical transformer 2 such that the working electrode 510 is in contact with the fluid 4.

Figure 2A schematically illustrates an exemplary embodiment of an electrical resistance sensor 5. The electrical resistance sensor 5 comprises an electrical resistance probe 51 and a measurement module 52. The electrical resistance probe 51 may be connected to the measurement module 52 via a wire or via a wireless communication.

The measurement module 52 is located outside the tank 21 of the electrical transformer 2 and is connected to the electrical resistance probe 51.

The electrical resistance probe 51 comprises a working electrode 510 in contact with the fluid 4. The electrical resistance sensor 5 further comprises a reference electrode 511 which is not in contact with the fluid 4.

During operation of the electric system 1, the cross-sectional area or thickness of the working electrode 510 decreases as a result of corrosion due to the corrosiveness of the fluid 4 inside the electrical transformer 2. As the working electrode 510 is subjected to the same fluid 4 as the corrosion-prone surface 3, the corrosion state of the corrosion-prone surface 3 can be derived from the change in electrical resistance during operation of the electric system 1.

The reference electrode 511, in contrast, is not in contact with the fluid 4 so that the electrical resistance of the reference electrode may be used to compensate for effects affecting the electrical resistance of the working electrode 510 such as the temperature.

The electrical resistance probe 51 may be arranged within the electrical transformer 2 such that the corrosiveness of the fluid 4 at the position of the working electrode 510 is comparable to the corrosiveness of the fluid 4 near the corrosion-prone surface 3 to be monitored.

For example, the electrical resistance probe 51 may be located inside a chamber 27 with a circulation of the fluid 4 where the fluid may be heated to a temperature that is representative of the actual temperature at the corrosion-prone surface 3 to be monitored.

Alternatively, the electrical resistance probe 51 may also be arranged such that the working electrode 510 is at the most aggressive location within the electrical transformer 2.

Of course, it is also possible to use two or more electrical resistance probes 51 arranged at different locations of the electrical transformer 2. Alternatively or in addition, one electrical resistance probe 51 may comprise two or more different working electrodes 510.

The location of the electrical resistance probe 51 may also be selected based on the pressure and/or the flow velocity of the fluid 4 during operation of the electric system 1. For example, the electrical resistance probe 51 may be installed in an existing or newly added side stream which may be isolated or depressurized if the flow velocity and the pressure of the fluid 4 are high.

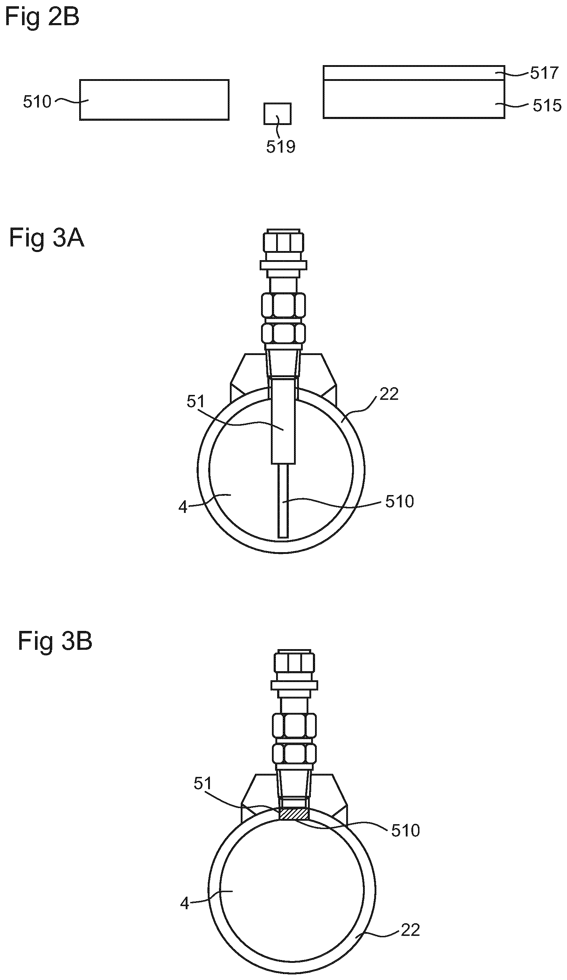

Figure 2B illustrates a detail of an electrical resistance probe 51 comprising a working electrode 510 and a further working electrode 515. In this example, the further working electrode is covered by a covering material 517 such as an insulating paper. For example, the working electrode and the further working electrode 515 may be made from the same material, so that the signals obtained from these working electrodes allow to obtain information on the influence of the insulating paper on the corrosion status.

Further, the electric system comprises a thermometer 519 to determine a temperature of the working electrode 510 and/or the reference electrode 511.

Figures 3A and 3B illustrate different types of electrical resistance probes 51 that may be used for the electrical resistance sensor 5.

In the example of Figure 3A, the working electrode 510 extends into an interior of a pipe 22 guiding the fluid 4. For example, a wire loop probe, a cylindrical probe, a tube loop probe, a strip loop probe, or a spiral loop probe may be used.

In the example of Figure 3B, the working electrode 510 terminates flush with an inner wall of pipe 22. For example, the electrical resistance probe 51 may be a large flush probe or a small flush probe.

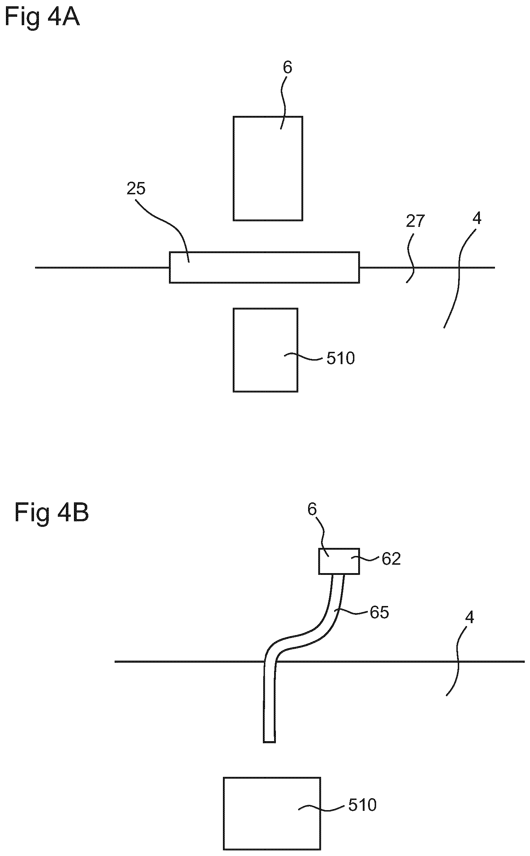

Figure 4A illustrates a detail of an electric system 1 where an imaging device 6 is configured to monitor an optical parameter of the working electrode 510 of the electrical resistance probe 51. For example, the imaging device 6 is a camera 61 that takes pictures at a predefined repetition rate in order to monitor the change in color of the working electrode 510.

The color change may also be used to obtain information on the corrosion state of the working electrode 510 which in turn provides information on the corrosion state of the corrosion-prone surface 3 to be monitored.

In the example of Figure 4A, the electric system 1 comprises an inspection window 25. The imaging device 61 is arranged such that it can take pictures of the working electrode 510 through the inspection window 25.

The pictures taken by the imaging device 61 may be stored locally or remotely.

Figure 4B illustrates a detail of an electric system 1 where the imaging device 6 isa detector unit 62 configured to detect a reflectivity of the working electrode 510 of the electrical resistance probe 51. An optical fiber 65 is configured to guide light from the detector unit 62 to the working electrode 510 and back so that the detector unit 62 may be arranged outside the tank 21.

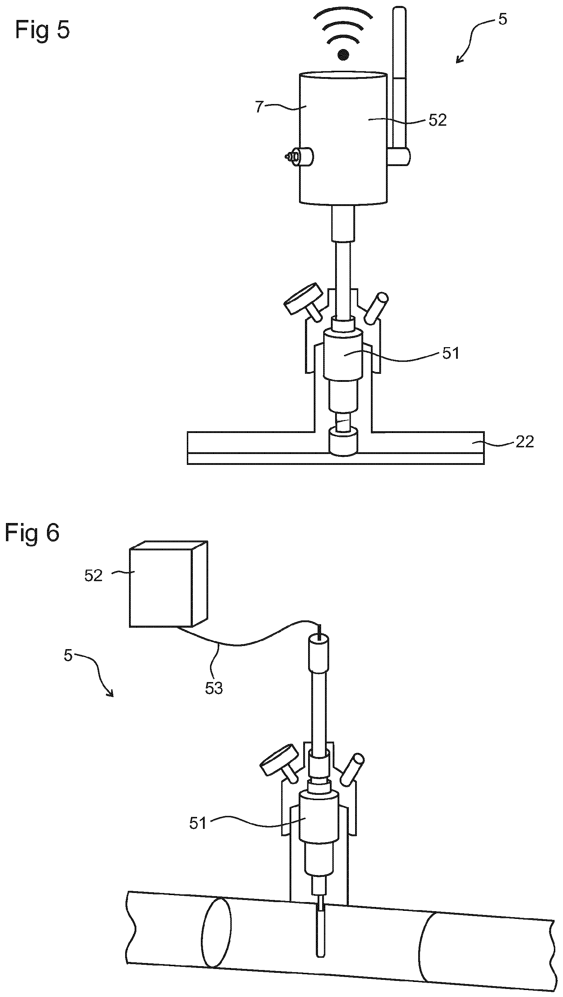

Figures 5 and 6 illustrate two configurations of the electrical resistance sensor 5.

In the exemplary embodiment of Figure 5, the measurement module 52 is in mechanical contact with the electrical resistance probe 51.

The measurement module 52 comprises a remote communication unit 7.

The remote communication unit 7 enables a remote monitoring of the electric system 1 with respect to the corrosion state of the corrosion-prone surface 3 to be monitored.

However, the remote communication unit 7 does not have to be part of the electrical resistance sensor 5. Rather, the electric system 1 may comprise a remote communication unit 7 connected to the electrical resistance sensor 5.

In the exemplary embodiment of Figure 6, the measurement module 52 is spaced apart from the electrical resistance probe 51. Exemplarily, the electrical connection between the measurement module 52 and the electrical resistance probe 51 is obtained via a wire 53. For example, the measurement module 52 may be mounted to a wall of a tank 21 of the electrical transformer 2.

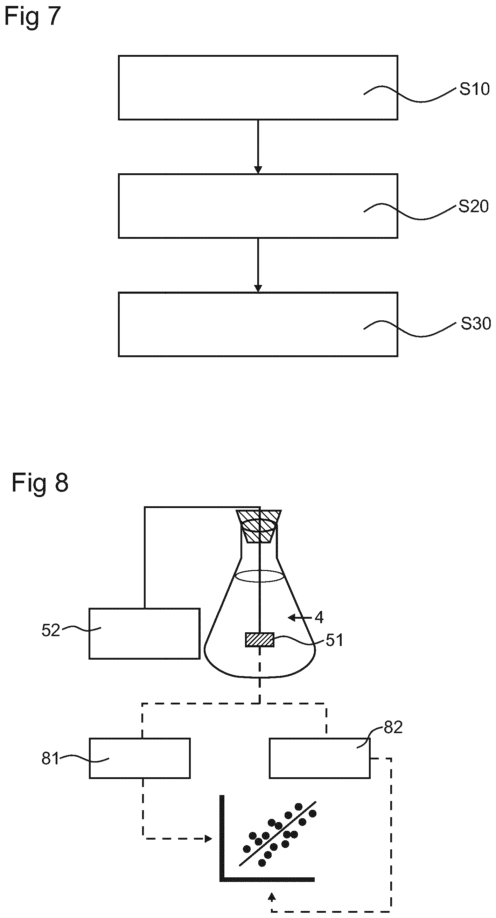

Figure 7 schematically illustrates a method of operating an electric system 1. Structural features mentioned in connection with the method are provided with the same reference signs as in the previous Figures for the sake of better understanding. The electric system 1 may be configured as described in connection with the previous figures. In particular, the electric system 1 comprises a component with a corrosion-prone surface 3 and with an electrical resistance sensor 5 with a working electrode 510 that is in contact with a fluid 4.

In a step S10, an electrical resistance of a working electrode 510 of an electrical resistance probe 51 is measured. This can be done continuously or at a predetermined repetition rate.

In a step S20, the corrosion state of the corrosion-prone surface 3 is assessed based on an electrical resistance variation of the working electrode 51 over time.

In a step S30, maintenance of the electric system 1 may be performed. This can be done at a stage where the data obtained from the electrical resistance sensor 5 indicates that maintenance or replacement of the corrosion-prone surface 3 is required.

Consequently, failure of the electric system 1 due to corrosion effects can be avoided. This helps to increase the reliability of the electric system.

Furthermore, the operating costs can be lowered as inspections of the corrosion-prone surfaces 3 by a human or a robot can be dispensed with.

Figure 8 shows an example of a setup that may be used for a calibration of a signal of the electrical resistance sensor 5.

The electrical resistance probe 51 is immersed in a fluid 4 and electrically connected to a measurement module 52. In an accelerated aging test, a correlation can be built up between a color change 81 of the working electrode 510 and a variation of a signal 82 of the electrical resistance probe 51.

Such correlations can be built up for any combination of fluids and corrosive materials used within the actual electrical transformer 2.

As described above, the cost and effort for an inspection inside the electrical transformer can be significantly reduced.

In particular it is not necessary for a human to enter the harsh confined space environment within the electrical transformer for an inspection of the corrosion-prone surface 3. Furthermore, maintenance of the electric system can be scheduled based on the signal of the electrical resistance sensor such that preventive maintenance can be performed. Consequently, the risk of failure of the electrical transformer due to corrosion effects can be eliminated or at least significantly reduced.

The embodiments shown in the Figures 1 to 8 as stated represent exemplary embodiments of the improved electric system and method for operating the electric system; therefore, they do not constitute a complete list of all embodiments according to the improved electric system and method for operating the electric system. Actual electric systems and methods for operating the electric system may vary from the embodiments shown in terms of arrangements, devices, and signals for example.

### Reference Signs

- 1: electric system
- 2: electrical transformer
- 21: tank
- 22: pipe
- 25: inspection window
- 27: chamber
- 29: on-load tap changer
- 3: corrosion-prone surface
- 4: fluid
- 5: electrical resistance sensor
- 51: electrical resistance probe
- 510: working electrode
- 511: reference electrode
- 515: further working electrode
- 517: covering material
- 519: thermometer
- 52: measurement module
- 53: wire
- 6: optical detection device
- 61: imaging device
- 62: detector unit
- 65: optical fiber
- 7: remote communication unit
- 81: color change
- 82: variation of signal
- S10: step
- S20: step
- S30: step

## Claims

1. An electric system (1) comprising an electrical transformer (2), wherein a component of the electrical transformer comprises a corrosion-prone surface (3) in contact with a fluid (4);
- the electric system (1) comprises an electrical resistance sensor (5) with an electrical resistance probe (51), wherein a working electrode (510) of the electric resistance probe (51) is in contact with the fluid (4), and
- the electrical resistance sensor (5) is configured to provide information on a corrosion state of the corrosion-prone surface (3) of the component.

2. The electric system according to claim 1,
wherein a surface of the working electrode (510) is made from the same material as the corrosion-prone surface (3) of the component.

3. The electric system according to claim 1 or 2,
wherein the electrical resistance probe (51) is located inside a chamber (27) with a circulation of the fluid (4),
wherein the fluid (4) is heatable to a temperature representative of the actual temperature at the corrosion-prone surface (29) of the component.

4. The electric system according to any one of the preceding claims,
wherein the electrical resistance probe (51) further comprises an encapsulated reference electrode (511) that is not in contact with the fluid (4).

5. The electric system according to any one of the preceding claims,
wherein the working electrode (510) is covered by a covering material (517).

6. The electric system according to any one of the preceding claims,
wherein the electric system (1) further comprises an optical detection device (6) configured to monitor an optical parameter of the working electrode (510) of the electrical resistance probe (51).

7. The electric system according to any one of the preceding claims,
wherein the electric system (1) comprises an inspection window (25), wherein the working electrode (510) of the electrical resistance probe (51) is visible through the inspection window (25).

8. The electric system according to any one of the preceding claims,
wherein the electrical resistance sensor (5) further comprises a measurement module (52) located outside a tank (21) of the electrical transformer (2).

9. The electric system according to any one of the preceding claims,
wherein the corrosion-prone surface (3) is one of: an electric contact surface of an on-load tap changer (29), a bare copper conductor or contact of the electrical transformer (2), an insulated paper covered copper winding conductor of the electrical transformer (2), an anticorrosion coating coated core material of the electrical transformer (2).

10. The electric system according to any one of the preceding claims,
wherein the electric system (1) comprises a thermometer (519), wherein the thermometer (519) is configured to determine a temperature of the working electrode (510) or the reference electrode (511).

11. A method of operating an electric system (1) with an electrical transformer (2) comprising a component with a corrosion-prone surface (3), wherein a corrosion state of the corrosion-prone surface (3) is assessed during operation of the electric system (1) by means of an electrical resistance sensor (5) with a working electrode (510) that is in contact with a fluid (4).

12. The method according to claim 11,
wherein the method further includes monitoring the working electrode (510) by means of an optical detection device (6).

13. The method according to claim 11 or 12,
wherein the corrosion state is assessed based on a correlation between an electrical resistance variation and a change in color of the working electrode (510) obtained from an accelerated aging test.

14. The method according to any one of claims 11 to 13, wherein a calibration of a signal of the electrical resistance sensor (5) is performed based on a standard test method for corrosive sulfur in electrical insulating fluids according to ASTM D1275 and/or a silver strip test according to DIN 51353 and/or a test according to IEC 62535.

15. The method according to any one of claims 11 to 14, wherein the electric system (1) is an electric system according to any one of the preceding claims.
